# EUROPEAN PATENT SPECIFICATION

(11) **EP 3 590 778 B1**
(45) Date of publication and mention of the grant of the patent: **06.01.2021**
(21) Application number: 19183718.6
(22) Date of filing: 01.07.2019
(51) Int. Cl.: B60T 13/22, B60T 15/04

(54) **VALVE ASSEMBLY**
VENTILANORDNUNG
ENSEMBLE VANNE

(30) Priority: 03.07.2018 IT 201800006900
(43) Date of publication of application: 08.01.2020
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 2 591 963
- EP-A1- 3 000 672
- EP-A1- 3 085 590
- EP-A2- 1 270 354
- WO-A1-2014/001876
- WO-A1-2017/006288
- DE-B1- 1 580 614

## Description

The present invention relates to a valve assembly, particularly for the management of the braking of a trailer.

Examples of such valves are known from the WO 2017/006288 A1 as well as from the DE 1 580 614 A1.

It is well known that in the case of a trailer towed by a prime mover, the braking systems thereof are operationally connected in such a way that the braking of the towing vehicle actuated by the operator also causes the braking of the towed trailer.

The braking system of the trailer is then driven by the braking system of the towing vehicle in order to synchronize the braking forces acting on same.

More particularly, the known towing vehicles comprise a braking valve, provided with a relative valve body inside which there is a seat communicating with a supply port that can be connected to a source of a work fluid under pressure (e.g. a pump), with a drain port that can be connected to a drain tank, with a braking port that can be connected to the braking system of the trailer and with a further port that can be connected to one or more auxiliary user points.

Inside the seat there is a distributor, which can be moved to open and close the connection between the various ports, so as to adjust accordingly the pressure of the work fluid that is conveyed to the braking system of the trailer.

In particular, the distributor can be moved from a home position, wherein the braking port is placed in communication with the drain port, to at least one braking position, wherein the braking port is placed in communication with the supply port.

The displacement of the distributor is activated by means of driving means connected to the braking system of the towing vehicle.

As a result of the actuation of the braking pedal of the towing vehicle, the driving means exert a force on the distributor, so as to cause the displacement thereof and to place the braking port in communication with the supply port.

Inside the seat are defined two thrust chambers which are communicating to each other, which act on the opposite ends of the distributor and inside which are housed the relative groups of springs.

Between the driving means and the distributor is interposed a connecting element provided with a cylindrical extension of predefined diameter and adapted to exert a certain force on the distributor following the displacement of the driving means themselves.

In particular, the driving means comprise a bottom element of the hollow type, housed inside a third chamber and connected to the braking system of the towing vehicle, which is adapted to compress a group of springs acting on the connecting element.

As a result of the braking actuation of the towing vehicle, the bottom element compresses the group of springs housed inside the third chamber, which exerts a force on the connecting element which, through its cylindrical extension, causes the displacement of the distributor.

The driving means then exert a force on the distributor which varies according to the braking pressure of the towing vehicle, and this force is counterbalanced by the braking pressure of the trailer. The distributor then moves inside the relative seat to balance the forces acting on it.

These valve assemblies are not without their drawbacks.

In particular, the stiffness of the spring packages housed inside the first and the third chamber does not allow maintaining substantially constant the ratio between the braking pressure and the pressure received from the braking system of the towing vehicle following the displacements of the distributor.

Another drawback is tied to the fact that the variations in pump flow or pressure, e.g. to supply power to other circuits, cause a change in the braking pressure.

The main aim of the present invention is to devise a valve assembly that allows significantly reducing, compared to the solutions known today, the negative effect on the braking pressure caused by the stiffness of the elastic means acting on the distributor.

Within this aim, one object of the present invention is to devise a valve assembly that allows the distributor displacing inside the seat to obtain the desired braking pressure independently of the flow and pressures present at the supply port and/or at the further port that can be connected to other user points. Another object of the present invention is to devise a valve assembly that allows overcoming the aforementioned drawbacks of the prior art in the context of a simple, rational, easy, effective to use and affordable solution.

The aforementioned objects are achieved by the present valve assembly according to claim 1.

Other characteristics and advantages of the present invention will be more evident from the description of a preferred, but not exclusive, embodiment of a valve assembly, illustrated by way of an indicative, but non-limiting example in the accompanying drawings, in which:

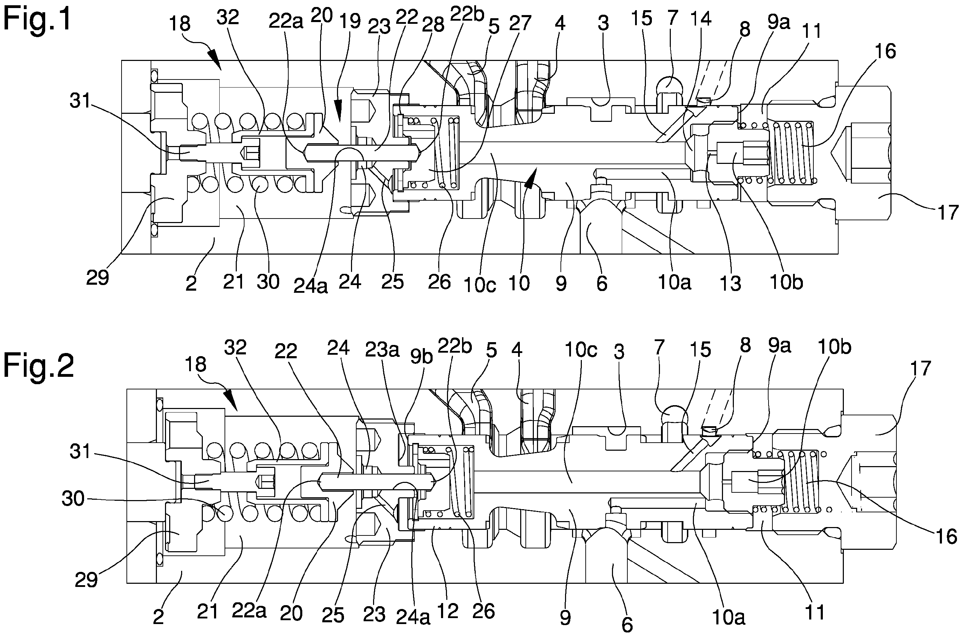

Figures 1 to 6 are sectional views of a valve assembly according to the invention in different operating configurations.

With particular reference to these figures, reference numeral 1 globally designates a valve assembly, particularly of the type of a brake-trailer valve.

The valve assembly 1 comprises a body 2 inside which is obtained a seat 3 communicating with at least one supply port 4 connectable to a source of a pressurized work fluid, e.g. of the type of a gear pump, at least one braking port 6 connectable to the braking system of a trailer, and at least one drain port 7 connectable to a drain tank.

In the embodiment shown in the figures, the seat 3 is also communicating with at least one secondary port 5 connectable to at least one user point.

The seat 3 preferably also has a driving port 8, which can be connected to another source of supply for the pressurized work fluid, e.g. of the type of a piston pump.

Inside the seat 3 at least one distributor 9 is housed in a sliding manner, which can be moved between a home position, in which the braking port 6 is isolated from the supply port 4 and is in communication with the drain port 7, and at least one braking position, in which the braking port 6 is in communication at least with the supply port 4.

More specifically, the distributor 9 is movable between a plurality of braking positions, in which the work fluid passage cross-section varies and, as a consequence, the braking pressure of the trailer also varies.

In the home position, the supply port 4 is placed in communication with the secondary port 5.

Within the distributor 9 is defined at least one connecting channel 10 which is adapted to place the braking port 6 in communication with at least a first chamber 11, operating on the first end 9a of the distributor 9, and with at least a second chamber 12, operating on a second end 9b of the distributor 9 opposed to the first end 9a. The first chamber 11 is interposed between the first end 9a of the distributor 9 and a closure element 17 of the seat 3 associated to the body 2. More particularly, the connecting channel 10 has a first section 10a communicating with the braking port 6, a second section 10b communicating with the first chamber 11, and a third section 10c communicating with the second chamber 12. Appropriately, between the first section 10a and the second section 10b there is a first orifice 13, and between the first section 10a and the third section 10c there is a second orifice 14.

The driving port 8 is adapted to be placed in communication with the second chamber 12 as a result of the displacement of the distributor 9 inside the seat 3.

Appropriately, the distributor 9 comprises at least one driving channel 15 communicating with the connecting channel 10; the distributor 9 is adapted to place the driving channel 15 in communication with the driving port 8 during the displacement thereof inside the seat 3.

The valve assembly 1 then comprises first elastic means 16 operating on the first end 9a and adapted to counteract the displacement of the distributor 9 from the home position towards a braking position. In particular, the first elastic means 16 are housed inside the first chamber 11 and are interposed between the distributor 9 and the closure element 17.

The first elastic means 16 are preferably made up of a single helical spring. Driving means 18 of the distributor 9 are also provided, which can be connected to the braking system of a towing vehicle and operating on the second end 9b to push the distributor itself from the home position towards a braking position. According to the invention, the driving means 18 comprise valve means 19 provided with at least one shutter element 20 adapted to place in communication/insulate the second chamber 12 with/from at least a third chamber 21 communicating with a further drain tank, wherein the valve means 19 comprise at least one connecting element 22 movable by the shutter element 20 and adapted to interact with the distributor 9. In the preferred embodiment shown in the figures, the connecting element 22 is locked together with the shutter element 20. Alternative embodiments cannot however be ruled out wherein a relative movement is provided, by a predefined stroke, between the shutter element 20 and the connecting element 22.

The drain tank and the further drain tank may coincide or be separate from each other.

The connecting element 22 is therefore protruding inside the second chamber 12.

Depending on its position, the shutter element 20 is therefore able to allow, choke or prevent the passage of the work fluid from the second chamber 12 to the third chamber 21.

The shutter element 20 preferably has a substantially conical shape so as to involve a progressive increase in the passage of the work fluid as a result of its displacement.

Appropriately, between the second chamber 12 and the third chamber 21 is interposed at least one abutment element 23 locked together with the body 2 and which defines an abutment surface 23a against which the second end of the distributor 9 is leaning. The abutment surface 23a then defines an end-of-stroke position of the distributor 9.

The abutment element 23 defines at least one opening 24 adapted to receive the shutter element 20. The opening 24 therefore faces the third chamber 21 and communicates with the second chamber 12.

Advantageously, inside the abutment element 23 there is one passage channel 25 adapted to place the opening 24 in communication with the second chamber 12.

More in detail, the opening 24 has at least one bottleneck 24a of the through type, inside which the connecting element 22 is inserted in a sliding manner. More particularly, the connecting element 22 has a first end 22a locked together with the shutter element 20 and a second end 22b, opposed to the first end 22a, projecting inside the second chamber 12 and adapted to interact with the distributor 9.

In the preferred embodiment shown in the figures, the connecting element 22 is of the type of a rod having an elongated shape.

Advantageously, the connecting element 22 has a smaller cross-section than the cross-section of the opening 24. The term "cross-section" used herein means the area defined by the connecting element 22 and by the opening 24 along a transverse plane to the relative longitudinal axis.

In more detail, both the connecting element 22 and the opening 24 have a substantially circular cross-section, where the diameter of the connecting element 22 is lower than the half of the diameter of the opening 24.

Preferably, between the connecting element 22 and the distributor 9 are interposed second elastic means 26, which are housed inside the second chamber 12. As the connecting element 22 moves towards the first end 9a of the distributor 9, the second elastic means 26 are then progressively compressed and the force they exert on the distributor itself increases.

The second elastic means 26 are preferably made up of a single helical spring. More in particular, the second end 22b of the connecting element 22 is associated with a disc 27, which slides with respect to the distributor 9, and the second elastic means 26 are interposed between the disc 27 and the distributor 9. A retaining element 28, of the type of a Seeger ring, is locked together with the distributor 9 and against which the disc 27 leans. The retaining element 28 then defines the end-of-stroke position of the disc 27 as it moves away from the first end 9a of the distributor 9.

Preferably, the second elastic means 26 are of the pre-compressed type. Appropriately, the second elastic means 26 have greater load with respect to the first elastic means 16.

Advantageously, the driving means 18 comprise at least one thrust element 29, connectable to the braking system of the towing vehicle, and third elastic means 30 interposed between the thrust element 29 and the shutter element 20.

The thrust element 29 is then adapted to move towards the shutter element 20 as a result of the actuation of the braking pedal of the towing vehicle, compressing the third elastic means 30.

In the embodiment shown in the illustrations, the driving means 18 comprise at least one preload screw 31 locked together with the thrust element 29 and inserted in a sliding manner inside a spring guide element 32 associated with the shutter element 20 and around which the third elastic means 30 are fitted.

The third elastic means 30 are preferably made up of a single helical spring. The operation of the present invention is as follows.

In the home condition, shown in figure 1, i.e. without the braking of the towing vehicle being activated, the supply port 4 is placed in communication with the secondary port 5 and the braking port 6 is placed in communication with the drain port 7. In this operating condition, the driving port 8 is also placed in communication with the drain port 7, through the driving channel 15 and the connecting channel 10. In the home position, the second end 9b of the distributor 9 leans against the abutment surface 23a.

As a result of the activation of the braking of the towing vehicle, the thrust element 29 moves in such a way as to compress the third elastic means 30, which then push the shutter element 20 closer to the opening 24.

The displacement of the shutter element 20 also causes the displacement of the connecting element 22 which, by means of the disc 27, compresses the second elastic means 26. The second elastic means 26 which, as mentioned above, have greater load than the first elastic means 16, push the distributor 9 from the home position to a braking position.

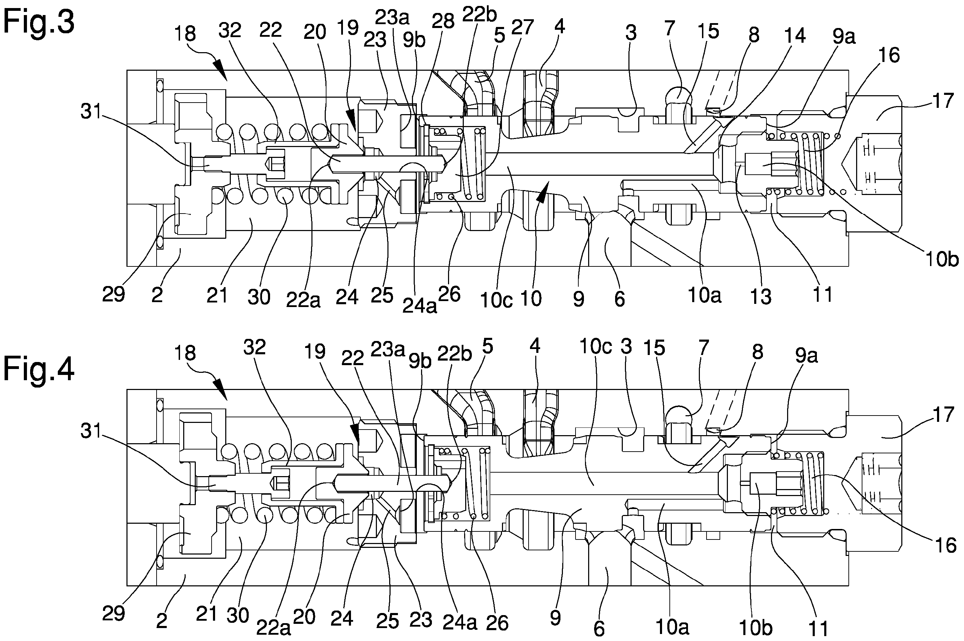

The displacement of the distributor 9 causes the closure of the connection between the braking port 6 and the drain port 7, as shown in Figure 2. The further forward movement of the connecting element 22, in turn due to the displacement of the thrust element 29 and of the shutter element 20, causes the opening of the connection between the braking port itself and the supply port 4, thus allowing the pressurized work fluid to flow towards the braking system of the trailer, as shown in Figure 3.

This way, the work fluid also enters the connecting channel 10 and flows into the first and second chambers 11 and 12 through the orifices 13 and 14.

The work fluid in the second chamber 12 then enters the passage channel 25 and reaches the opening 24. As long as the shutter element 20 is spaced away from the opening 24, the work fluid passes through the latter, enters the third chamber 21 and is drained. In this operating condition, the pressure of the work fluid in the first and in the second chamber 11 and 12 is therefore substantially zero and only the forces exerted by the first and by the second elastic means 16 and 26 operate on the distributor 9.

The displacement of the thrust element 29 towards the shutter element 20 causes the progressive compression of the third elastic means 30 and, due to the load difference between the first and the second elastic means 16 and 26, the displacement of the distributor 9 towards the end-of-stroke position leaning against the closure element 17, closing the connection between the supply port 4 and the secondary port 5, as shown in Figure 4.

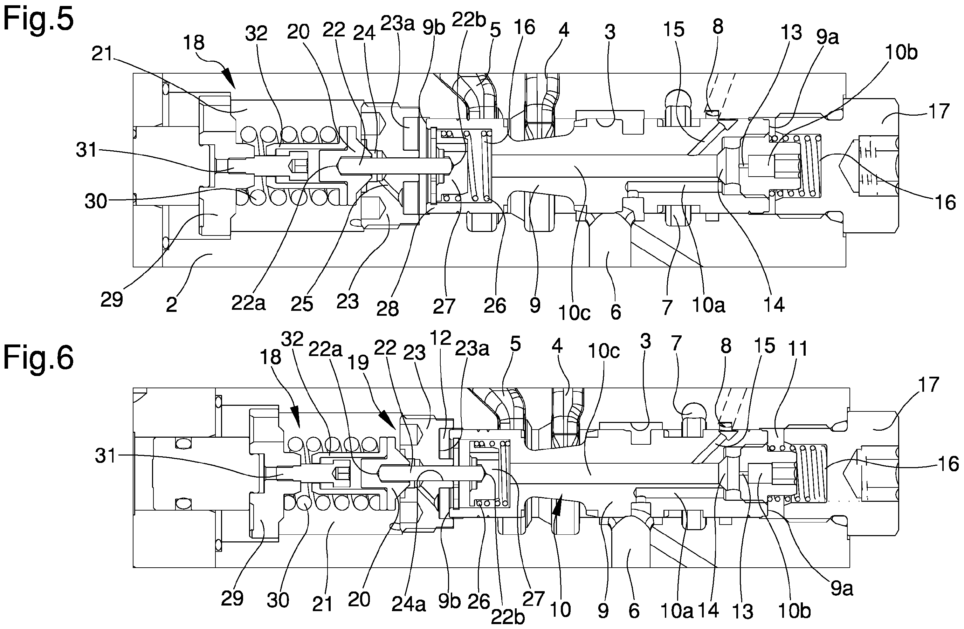

Once the shutter element 20 has reached the opening 24 and leans against the abutment element 23, the further forward movement of the thrust element 29 causes further compression of the third elastic means 30, which then reach the position of maximum compression, as shown in Figure 5.

When, as a result of the displacement of the thrust element 29, the shutter element 20 moves close to the opening 24 and chokes the flow of the work fluid inside the third chamber 21, the pressure inside the first chamber and the second chamber 11 and 12 increases and the forces generated by the pressure of the work fluid present in the chambers themselves therefore also operate on the distributor.

In this operating condition, the distributor 9 is free to displace to obtain the desired braking pressure.

In particular, when the pressure inside the second chamber 12 reaches a limit value, corresponding to the calibration pressure of the third elastic means 30, the shutter element 20 is pushed away from the opening 24 in order to drain at least part of the work fluid present in the second chamber 12. The pressure inside the second chamber 12 therefore decreases and the distributor 9, as a result of the higher pressure inside the first chamber 11, due to the presence of the orifices 13 and 14, moves closer to the abutment element 23, compressing the second elastic means 26.

The shutter element 20 then moves closer to/further away from the opening 24 depending on the force exerted by the third elastic means 30 and by the pressure of the fluid in the second chamber 12.

The distributor 9, on the contrary, moves freely inside the seat 3 depending on the braking pressure, regardless of the work fluid pressure in the supply port 4 and in the secondary port 5.

It has in practice been ascertained that the described invention achieves the intended objects and, in particular, it is underlined that the valve assembly to which the present invention relates, allows the management of the braking pressure being released from the supply pressure of the work fluid.

In particular, the use of the connecting element allows the force to be transferred from the driving means to the distributor and at the same time, having a reduced cross-section, it does not transfer sufficient force to unbalance the valve means/ distributor system. In addition, the passage channel, which places the second chamber in communication with the opening facing the shutter element, allows the flow of the work fluid slowing down towards the opening itself and dampens the pulsations on the shutter element itself.

In addition, the orifices along the connecting channel, which slow down the variation of the work fluid contained in the first and in the second chambers, also contribute to the action of stabilizing the braking pressure.

In addition, the presence of elastic means consisting of individual springs characterized by a light load allows limiting the negative effect on the displacements of the distributor and, therefore, on the braking pressure.

## Claims

1. Valve assembly (1), comprising:
- a body (2) inside which a seat (3) is obtained communicating with at least one supply port (4) connectable to a source of a pressurized work fluid, at least one braking port (6) connectable to the braking system of a trailer, at least one drain port (7) connectable to a drain tank;
- at least one distributor (9) housed in a sliding manner inside said seat (3) and movable between a home position, in which said braking port (6) is isolated from said supply port (4) and in communication with said drain port (7), and at least one braking position, in which said braking port (6) is in communication at least with said supply port (4);
within said distributor (9) being defined at least one connecting channel (10) which is adapted to place said braking port (6) in communication with at least a first chamber (11) operating on a first end (9a) of said distributor (9) and with at least a second chamber (12) operating on a second end (9b) of said distributor (9) opposed to said first end (9a);
- first elastic means (16) operating on said first end (9a) and adapted to counteract the displacement of said distributor (9) from the home position towards a braking position;
- driving means (18) of said distributor (9) connectable to the braking system of a towing vehicle and operating on said second end (9b) to push said distributor (9) from the home position towards a braking position;
**characterized by** the fact that said driving means (18) comprise valve means (19) provided with at least one shutter element (20) adapted to place/insulate said second chamber (12) in communication with/from at least a third chamber (21) communicating with a further drain tank, and by the fact that said valve means (19) comprise at least one connecting element (22) movable by said shutter element (20) and adapted to interact with said distributor (9).

2. Valve assembly (1) according to claim 1, **characterized by** the fact that between said second chamber (12) and said third chamber (21) is interposed at least one abutment element (23) locked together with said body (2) and defining at least one opening (24) adapted to receive said shutter element (20) which faces said third chamber (21) and which communicates with said second chamber (12).

3. Valve assembly (1) according to claim 2, **characterized by** the fact that said abutment element (23) comprises at least one passage channel (25) adapted to place said opening (24) in communication with said second chamber (12).

4. Valve assembly (1) according to claim 2 or 3, **characterized by** the fact that said opening (24) has at least one bottleneck (24a) of the through type and that said connecting element (22) is inserted in a sliding manner inside said bottleneck (24a).

5. Valve assembly (1) according to claim 3, **characterized by** the fact that the section of said connecting element (22) is smaller than the section of said opening (24).

6. Valve assembly (1) according to claim 4, **characterized by** the fact that said connecting element (22) and said opening (24) have a substantially circular cross-section and by the fact that the diameter of said connecting element (22) is lower than the half of the diameter of said opening (24).

7. Valve assembly (1) according to one or more of the preceding claims, **characterized by** the fact that second elastic means (26) are interposed between said connecting element (22) and said distributor (9).

8. Valve assembly (1) according to claim 7, **characterized by** the fact that said second elastic means (26) are of the pre-compressed type and have a greater load with respect to said first elastic means (16).

9. Valve assembly (1) according to one or more of claims from 2 to 8, **characterized by** the fact that said abutment element (23) defines at least one abutment surface (23a) against which the second end (9b) of said distributor (9) is adapted to lean.

10. Valve assembly (1) according to one or more of the preceding claims, **characterized by** the fact that said connecting element (22) has a first end (22a) locked together with said shutter element (20) and a second end (22b), opposed to said first end (22a), projecting inside said second chamber (12) and adapted to interact with said distributor (9).

11. Valve assembly (1) according to one or more of the preceding claims, **characterized by** the fact that said connecting element (22) is of the type of a rod having an elongated shape.

12. Valve assembly (1) according to one or more of the preceding claims, **characterized by** the fact that said driving means (18) comprise at least one thrust element (29) connectable to the braking system of the towing vehicle and third elastic means (30) interposed between said thrust element (29) and said shutter element (20).

13. Valve assembly (1) according to one or more of the preceding claims, **characterized by** the fact that said connecting channel (10) comprises at least a first section (10a) communicating with said braking port (6), at least a second section (10b) communicating with said first chamber (11), between said first section (10a) and said second section (10b) a first orifice (13) being interposed, and at least a third section (10c) communicating with said second chamber (12), between said first section (10a) and said third section (10c) a second orifice (14) being interposed.

14. Valve assembly (1) according to one or more of the preceding claims, **characterized by** the fact that said seat (3) is communicating with at least one driving port (8) and by the fact that said distributor (9) is adapted to place said driving port (8) in communication with said second chamber (12) during its displacement inside said seat (3).

15. Valve assembly (1) according to claim 14, **characterized by** the fact that said distributor (9) comprises at least one driving channel (15) communicating with said connecting channel (10), said distributor (9) being adapted to place said driving channel (15) in communication with said driving port (8) during its displacement inside said seat (3).

## Patentansprüche

1. Ventilbaugruppe (1), umfassend:
- einen Körper (2), in dessen Inneren ein Sitz (3) ausgebildet ist, der mit mindestens einem Versorgungsanschluss (4) in Verbindung steht, der mit einer Quelle eines unter Druck stehenden Arbeitsfluids verbindbar ist, mindestens einem Bremsanschluss (6), der mit dem Bremssystem eines Anhängers verbindbar ist, mindestens einem Ablassanschluss (7), der mit einem Ablassbehälter verbindbar ist;
- mindestens einen Verteiler (9), der gleitend innerhalb des Sitzes (3) untergebracht ist und zwischen einer Ausgangsstellung, in der der Bremsanschluss (6) von dem Versorgungsanschluss (4) isoliert ist und mit dem Ablassanschluss (7) in Verbindung steht, und mindestens einer Bremsstellung bewegbar ist, in der der Bremsanschluss (6) mindestens mit dem Versorgungsanschluss (4) in Verbindung steht;
wobei innerhalb des Verteilers (9) mindestens ein Verbindungskanal (10) ausgebildet ist, der ausgebildet ist, den Bremsanschluss (6) mit mindestens einer ersten Kammer (11), die auf ein erstes Ende (9a) des Verteilers (9) wirkt, und mit mindestens einer zweiten Kammer (12), die auf ein zweites Ende (9b) des Verteilers (9) wirkt, das dem ersten Ende (9a) gegenüberliegt, in Verbindung zu bringen;
- erste elastische Mittel (16), die auf das erste Ende (9a) wirken und ausgebildet sind, der Verschiebung des Verteilers (9) aus der Ausgangsstellung in eine Bremsstellung entgegenzuwirken;
- Antriebsmittel (18) des Verteilers (9), die mit dem Bremssystem eines Zugfahrzeugs verbindbar sind und auf das zweite Ende (9b) wirken, um den Verteiler (9) aus der Ausgangsstellung in eine Bremsstellung zu schieben;
**gekennzeichnet durch** die Tatsache, dass die Antriebsmittel (18) Ventilmittel (19) umfassen, die mit mindestens einem Verschlusselement (20) versehen sind, das ausgebildet ist, die zweite Kammer (12) in Verbindung mit/von mindestens einer dritten Kammer (21) zu bringen/ isolieren, die mit einem weiteren Ablassbehälter in Verbindung steht, und durch die Tatsache, dass die Ventilmittel (19) mindestens ein Verbindungselement (22) umfassen, das durch das Verschlusselement (20) beweglich ist und ausgebildet ist, mit dem Verteiler (9) zusammenzuwirken.

2. Ventilanordnung (1) nach Anspruch 1, **dadurch gekennzeichnet, dass** zwischen der zweiten Kammer (12) und der dritten Kammer (21) mindestens ein Anschlagelement (23) angeordnet ist, das mit dem Körper (2) verriegelt ist und mindestens eine Öffnung (24) definiert, die ausgebildet ist, das Verschlusselement (20) aufzunehmen, die der dritten Kammer (21) zugewandt ist und mit der zweiten Kammer (12) in Verbindung steht.

3. Ventilanordnung (1) nach Anspruch 2, **dadurch gekennzeichnet, dass** das Anschlagelement (23) mindestens einen Durchgangskanal (25) aufweist, der ausgebildet ist, die Öffnung (24) mit der zweiten Kammer (12) in Verbindung zu bringen.

4. Ventilanordnung (1) nach Anspruch 2 oder 3, **dadurch gekennzeichnet, dass** die Öffnung (24) mindestens einen durchgehenden Flaschenhals (24a) aufweist und dass das Verbindungselement (22) gleitend in dem Flaschenhals (24a) eingesetzt ist.

5. Ventilanordnung (1) nach Anspruch 3, **gekennzeichnet durch** die Tatsache, dass der Querschnitt des Verbindungselements (22) kleiner ist als der Querschnitt der Öffnung (24).

6. Ventilanordnung (1) nach Anspruch 4, **dadurch gekennzeichnet, dass** das Verbindungselement (22) und die Öffnung (24) einen im Wesentlichen kreisförmigen Querschnitt haben und dass der Durchmesser des Verbindungselements (22) kleiner ist als die Hälfte des Durchmessers der Öffnung (24).

7. Ventilanordnung (1) nach einem oder mehreren der vorstehenden Ansprüche, **dadurch gekennzeichnet, dass** zwischen dem Verbindungselement (22) und dem Verteiler (9) zweite elastische Mittel (26) angeordnet sind.

8. Ventilanordnung (1) nach Anspruch 7, **gekennzeichnet durch** die Tatsache, dass die zweiten elastischen Mittel (26) vom vorkomprimierten Typ sind und im Vergleich zu den ersten elastischen Mitteln (16) eine größere Spannung aufweisen.

9. Ventilanordnung (1) nach einem oder mehreren der Ansprüche 2 bis 8, **dadurch gekennzeichnet, dass** das Anschlagelement (23) mindestens eine Anschlagfläche (23a) definiert, gegen die sich das zweite Ende (9b) des Verteilers (9) anlehnen kann.

10. Ventilanordnung (1) nach einem oder mehreren der vorhergehenden Ansprüche, **dadurch gekennzeichnet, dass** das Verbindungselement (22) ein erstes Ende (22a), das mit dem Verschlusselement (20) verriegelt ist, und ein zweites Ende (22b) aufweist, das dem ersten Ende (22a) gegenüberliegt, in das Innere der zweiten Kammer (12) ragt und ausgebildet ist, mit dem Verteiler (9) zusammenzuwirken.

11. Ventilanordnung (1) nach einem oder mehreren der vorstehenden Ansprüche, **dadurch gekennzeichnet, dass** das Verbindungselement (22) nach Art einer Stange mit länglicher Form ausgebildet ist.

12. Ventilanordnung (1) nach einem oder mehreren der vorstehenden Ansprüche, **dadurch gekennzeichnet, dass** die Antriebsmittel (18) mindestens ein mit dem Bremssystem des Zugfahrzeugs verbindbares Schubelement (29) und dritte elastische Mittel (30) umfassen, die zwischen dem Schubelement (29) und dem Verschlusselement (20) angeordnet sind.

13. Ventilanordnung (1) nach einem oder mehreren der vorstehenden Ansprüche, **dadurch gekennzeichnet, dass** der Verbindungskanal (10) mindestens einen ersten Abschnitt (10a), der mit dem Bremsanschluss (6) in Verbindung steht, mindestens einen zweiten Abschnitt (10b), der mit der ersten Kammer (11) in Verbindung steht, wobei zwischen dem ersten Abschnitt (10a) und dem zweiten Abschnitt (10b) eine erste Öffnung (13) angeordnet ist, und mindestens einen dritten Abschnitt (10c) umfasst, der mit der zweiten Kammer (12) in Verbindung steht, wobei zwischen dem ersten Abschnitt (10a) und dem dritten Abschnitt (10c) eine zweite Öffnung (14) angeordnet ist.

14. Ventilanordnung (1) nach einem oder mehreren der vorhergehenden Ansprüche, **dadurch gekennzeichnet, dass** der Sitz (3) mit mindestens einem Antriebsanschluss (8) in Verbindung steht und dass der Verteiler (9) ausgebildet ist, während seiner Verschiebung innerhalb des Sitzes (3) den Antriebsanschluss (8) mit der zweiten Kammer (12) in Verbindung zu bringen.

15. Ventilanordnung (1) nach Anspruch 14, **dadurch gekennzeichnet, dass** der Verteiler (9) mindestens einen Antriebskanal (15) aufweist, der mit dem Verbindungskanal (10) in Verbindung steht, wobei der Verteiler (9) ausgebildet ist, während seiner Verschiebung im Sitz (3) den Antriebskanal (15) mit dem Antriebsanschluss (8) in Verbindung zu bringen.

## Revendications

1. Ensemble de vanne (1), comprenant :
- un corps (2) à l'intérieur duquel est obtenu un siège (3), communiquant avec au moins un port d'alimentation (4) pouvant être connecté à une source d'un fluide de travail sous pression, au moins un port de freinage (6) pouvant être connecté au système de freinage d'une remorque, au moins port de vidange (7) pouvant être connecté à un réservoir de vidange ;
- au moins un distributeur (9) logé de manière coulissante à l'intérieur dudit siège (3) et pouvant se déplacer entre une position de repos, dans laquelle ledit port de freinage (6) est isolé dudit port d'alimentation (4) et en communication avec ledit port de vidange (7), et au moins une position de freinage, dans laquelle ledit port de freinage (6) est en communication au moins avec ledit port d'alimentation (4) ;
à l'intérieur dudit distributeur (9), au moins un canal de connexion (10) est défini, qui est adapté pour faire communiquer ledit port de freinage (6) avec au moins une première chambre (11) fonctionnant sur une première extrémité (9a) dudit distributeur (9), et avec au moins une deuxième chambre (12) fonctionnant sur une deuxième extrémité (9b) dudit distributeur (9) opposée à ladite première extrémité (9a) ;
- des premiers moyens élastiques (16) fonctionnant sur ladite première extrémité (9a) et adaptés pour contrecarrer le déplacement dudit distributeur (9) de la position de repos vers une position de freinage ;
- des moyens de commande (18) dudit distributeur (9) pouvant être connectés au système de freinage d'un véhicule tracteur et fonctionnant sur ladite deuxième extrémité (9b) pour pousser ledit distributeur (9) de la position de repos vers une position de freinage ;
**caractérisé en ce que** lesdits moyens de commande (18) comprennent des moyens de vanne (19) pourvus d'au moins un élément d'obturation (20) adapté pour faire communiquer/isoler ladite deuxième chambre (12) avec/d'au moins une troisième chambre (21) communiquant avec un réservoir supplémentaire de vidange, et **en ce que** lesdits moyens de vanne (19) comprennent au moins un élément de connexion (22) pouvant être déplacé par ledit élément d'obturation (20) et adapté pour interagir avec ledit distributeur (9).

2. Ensemble de vanne (1) selon la revendication 1, **caractérisé en ce que**, entre ladite deuxième chambre (12) et ladite troisième chambre (21), est interposé au moins un élément de butée (23) verrouillé avec ledit corps (2) et définissant au moins une ouverture (24) adaptée pour recevoir ledit élément d'obturation (20) qui fait face à ladite troisième chambre (21) et qui communique avec ladite deuxième chambre (12).

3. Ensemble de vanne (1) selon la revendication 2, **caractérisé en ce que** ledit élément de butée (23) comprend au moins un canal de passage (25) adapté pour faire communiquer ladite ouverture (24) avec ladite deuxième chambre (12).

4. Ensemble de vanne (1) selon la revendication 2 ou 3, **caractérisé en ce que** ladite ouverture (24) a au moins un goulot d'étranglement (24a) du type traversant et **en ce que** ledit élément de connexion (22) est inséré de manière coulissante à l'intérieur dudit goulot d'étranglement (24a).

5. Ensemble de vanne (1) selon la revendication 3, **caractérisé en ce que** la section dudit élément de connexion (22) est plus petite que la section de ladite ouverture (24).

6. Ensemble de vanne (1) selon la revendication 4, **caractérisé en ce que** ledit élément de connexion (22) et ladite ouverture (24) ont une section transversale sensiblement circulaire et **en ce que** le diamètre dudit élément de connexion (22) est inférieur à la moitié du diamètre de ladite ouverture (24).

7. Ensemble de vanne (1) selon une ou plusieurs des revendications précédentes, **caractérisé en ce que** des deuxièmes moyens élastiques (26) sont interposés entre ledit élément de connexion (22) et ledit distributeur (9).

8. Ensemble de vanne (1) selon la revendication 7, **caractérisé en ce que** lesdits deuxièmes moyens élastiques (26) sont du type pré-comprimé et ont une charge plus importante par rapport auxdits premiers moyens élastiques (16).

9. Ensemble de vanne (1) selon une ou plusieurs des revendications de 2 à 8, **caractérisé en ce que** ledit élément de butée (23) définit au moins une surface de butée (23a) contre laquelle la deuxième extrémité (9b) dudit distributeur (9) est adaptée à prendre appui.

10. Ensemble de vanne (1) selon une ou plusieurs des revendications précédentes, **caractérisé en ce que** ledit élément de connexion (22) a une première extrémité (22a) verrouillée avec ledit élément d'obturation (20) et une deuxième extrémité (22b), opposée à ladite première extrémité (22a), faisant saillie à l'intérieur de ladite deuxième chambre (12) et adaptée pour interagir avec ledit distributeur (9).

11. Ensemble de vanne (1) selon une ou plusieurs des revendications précédentes, **caractérisé en ce que** ledit élément de connexion (22) est du type d'une tige ayant une forme allongée.

12. Ensemble de vanne (1) selon une ou plusieurs des revendications précédentes, **caractérisé en ce que** lesdits moyens de commande (18) comprennent au moins un élément de poussée (29) pouvant être connecté au système de freinage du véhicule tracteur et des troisième moyens élastiques (30) interposés entre ledit élément de poussée (29) et ledit élément d'obturation (20).

13. Ensemble de vanne (1) selon une ou plusieurs des revendications précédentes, **caractérisé en ce que** ledit canal de connexion (10) comprend au moins une première section (10a) communiquant avec ledit port de freinage (6), au moins une deuxième section (10b) communiquant avec ladite première chambre (11), un premier orifice (13) étant interposé entre ladite première section (10a) et ladite deuxième section (10b), et au moins une troisième section (10c) communiquant avec ladite deuxième chambre (12), un deuxième orifice (14) étant interposé entre ladite première section (10a) et ladite troisième section (10c).

14. Ensemble de vanne (1) selon une ou plusieurs des revendications précédentes, **caractérisé en ce que** ledit siège (3) communique avec au moins un port de commande (8), et **en ce que** ledit distributeur (9) est adapté pour faire communiquer ledit port de commande (8) avec ladite deuxième chambre (12) pendant son déplacement à l'intérieur dudit siège (3).

15. Ensemble de vanne (1) selon la revendication 14, **caractérisé en ce que** ledit distributeur (9) comprend au moins un canal de commande (15) communiquant avec ledit canal de connexion (10), ledit distributeur (9) étant adapté pour faire communiquer ledit canal de commande (15) avec ledit port de commande (8) pendant son déplacement à l'intérieur dudit siège (3).
